# EUROPÄISCHE PATENTSCHRIFT

(11) **EP 0 916 046 B1**
(45) Veröffentlichungstag und Bekanntmachung des Hinweises auf die Patenterteilung: **16.10.2002**
(21) Anmeldenummer: 97927068.3
(22) Anmeldetag: 28.05.1997
(51) Int. Cl.: F16K 1/44

(54) **DOPPELSITZVENTIL**
DOUBLE-SEATED VALVE
SOUPAPE A SIEGE DOUBLE

(43) Veröffentlichungstag der Anmeldung: 19.05.1999
(73) Patentinhaber: Tetra Laval Holdings & Finance SA, 1009 Pully (CH)
(72) Erfinder: MADSEN, Karsten, Schack, DK-6000 Kolding (DK); BENEDETTI, Paolo, I-41100 Modena (IT)
(74) Vertreter: Vonnemann, Gerhard, Dr.-Ing.
(86) Internationale Anmeldenummer: EP9702779
(87) Internationale Veröffentlichungsnummer: WO98054493

(56) Entgegenhaltungen:
- EP-A- 0 085 852
- DE-A- 4 243 111
- DE-A- 19 603 070
- DE-C- 354 818

## Beschreibung

Die Erfindung betrifft ein Doppelsitzventil, insbesondere für aseptische Anwendungszwecke, mit mindestens zwei Leitungsanschlussen, zwischen denen zwei ringförmige Ventilsitze koaxial zueinander und in Serie angeordnet sind, mit zwei unabhängig voneinander axial verschiebbaren Schließern, die im geschlossenen Zustand mit den Ventilsitzen dichtend zusammenwirken und einen Hohlraum zwischen sich einschließen, und mit mindestens einem in den Hohlraum mündenden Reinigungsanschluß für die Einleitung eines Reinigungsmediums.

Doppelsitzventile werden insbesondere in der Lebensmittelverarbeitung zur Herstellung steriler Produkte, beispielsweise Milchprodukte, eingesetzt. Ein Leckagehohlraum zwischen den beiden Schließelementen nimmt dabei eine gegebenenfalls aufgetretene Leckage auf, die über einen in den Leckagehohlraum mündenden besonderen Leitungsanschluß abgeführt werden kann. Zur Aufrechterhaltung oder Wiederherstellung der Sterilität des Ventils unter allen Umständen muß der Leckagehohlraum wirkungsvoll gereinigt und sterilisiert werden können.

Diese Reinigung kann bei einem Doppelsitzventil entweder dadurch geschehen, daß der Leckagehohlraum im beiderseits geschlossenen Zustand von einer Reinigungsflüssigkeit oder heißem Dampf durchströmt wird, wofür besondere in den Leckageraum mündende Zufluß- und Abflußleitungen mit zusätzlichen Absperrventilen vorgesehen sind, oder dadurch, daß eines der beiden Schließelemente des Doppelsitzventils "angelüftet" wird, um das über die Zuflußleitung zufließende Reinigungsmedium vorbeiströmen zu lassen, so daß auch der jeweilige Ventilsitz gereinigt oder sterilisiert wird.

Ein Doppelsitzventil gemäß dem Oberbegriff des Patentanspruchs 1 ist beispielsweise aus der DE 42 43 111 A1 bekannt. Das bekannte Doppelsitzventil besitzt als Schließelemente zwei Ventilteller, die mittels zweier teleskopartig ineinandergeschachtelter Schäfte axial verschiebbar und an zwei Ventilsitze andrückbar sind. Die Ventilsitze sind in einem relativ großen axialen Abstand zueinander angeordnet, so daß die beiden Ventilteller im geschlossenen Zustand einen relativ großen Leckagehohlraum zwischen sich einschließen.

Wegen der großen Innenflächen ist es einerseits schwierig, solche großen Leckagehohlräume steril zu halten. Bei Verwendung von heißem Dampf können sich andererseits die Ventilteller oder sogar das gesamte Ventilgehäuse derart aufheizen, daß es zu chemischen Veränderungen der im benachbarten Hohlraum hinter dem Ventilteller befindlichen Substanzen, beispielsweise Milchprodukten, kommt. Dieser nachteilige Einfluß auf die Beschaffenheit der zu verarbeitenden Substanzen muß unter allen Umständen vermieden werden.

Des weiteren hat das bekannte Doppelsitzventil den Nachteil, daß sich der untere Ventilteller auch im geöffneten Zustand stets innerhalb des Leckagehohlraums befindet. Die zu verarbeitenden Substanzen müssen beim Durchqueren des Leckagehohlraums wegen der labyrinthartigen Konstruktion mehrmals ihre Fließrichtung wechseln. Wenn sie beispielsweise vom oberen in den unteren Rohrstutzen gelangen sollen, werden sie zunächst zwischen dem oberen Ventilteller und dem zugehörigen Ventilsitz radial nach innen gelenkt, müssen dann axial nach unten fließen, um am unteren Ventilteller wieder radial nach außen auszuweichen. Nach einer weiteren kurzen Strecke axial nach unten werden sie zwischen dem unteren Ventilteller und dem zugehörigen Ventilsitz erneut radial nach innen gedrückt, bis sie schließlich den Leckagehohlraum axial nach unten verlassen können. Daß diese Verhältnisse aus strömungstechnischen Gründen nicht optimal sind, leuchtet unmittelbar ein.

Abgesehen davon begrenzen die kleinen Abstände zwischen den Ventiltellern und den Wänden des Leckagehohlraums bzw den Ventilsitzen die maximale Größe von Partikeln, die gegebenenfalls in der zu verarbeitenden Substanz enthalten sind. Beispielsweise kann die Verarbeitung von Fruchtjoghurt mit ganzen Früchten hier auf ihre Grenzen stoßen.

Aufgabe der Erfindung ist es, ein Doppelsitzventil anzugeben, dessen Konstruktion eine verbesserte Ausgestaltung des Hohlraums erlaubt, so daß die zu verarbeitende Substanz strömungsgünstig passieren kann, auch wenn größere Partikel darin enthalten sind.

Die Aufgabe wird erfindungsgemäß dadurch gelöst, daß ein einstückiges, ringförmig umlaufend ausgestaltetes, elastisches Dichtelement mit seinen beiden Endabschnitten an den beiden Schließern jeweils dichtend befestigt ist, wobei an jeden Endabschnitt angrenzend eine Dichtfläche ausgebildet ist, die durch einen Schließer an den zugehörigen Ventilsitz andrückbar ist, und daß das Dichtelement einen die beiden Endabschnitte miteinander verbindenden Rollmembranabschnitt besitzt, der den Hohlraum begrenzt.

Das erfindungsgemäße Doppelsitzventil hat zunächst den Vorteil, daß ein einziges Dichtelement drei Funktionen erfüllt. Einerseits dichtet es die beiden Schließer gegenüber den beiden Ventilsitzen ab und andererseits ubernimmt es die Funktion einer dichten und flexiblen Verbindung zwischen den beiden Schließern, durch die der Hohlraum begrenzt und von dem Innenraum der Schließer getrennt wird.

Die letztgenannte Funktion wird beim bekannten Doppelsitzventil von einem Faltenbalg aus Metall übernommen, der die erforderliche axiale Relativbewegung der beiden Ventilteller nur um den Preis einer großen axialen Baulänge gewährleisten kann. Der dadurch bedingte große Axialabstand der beiden Ventilteller ist eine Ursache für die nachteilige Größe des Leckagehohlraums.

Die erfindungsgemäße Konstruktion macht den voluminösen Faltenbalg entbehrlich. Dadurch können die beiden Ventilsitze in axialer Richtung eng aneinanderrücken, so daß der dazwischen befindliche Hohlraum erheblich verkleinert wird. Bei einer Sterilisation mit heißem Dampf werden wegen der starken Verkleinerung der dem Dampf ausgesetzten Fläche auch bei längerer Dampfeinwirkung die anderen Bereiche des Ventils nicht unzulässig stark erhitzt. Die relative Bewegung der beiden Schließer wird durch den Rollmembranabschnitt des Dichtelements gewährleistet.

In einer bevorzugten Ausführungsform der Erfindung ist vorgesehen, daß ein erster Schließer ein Mantelteil aufweist, dessen Ende zu einem Kragenabschnitt becherförmig erweitert ist, und daß ein zweiter Schließer ein Kopfteil besitzt, das radial innerhalb des Kragenabschnitts angeordnet ist.

Durch diese Maßnahme bilden die beiden Schließer eine besonders kompakte Einheit, die eine extreme Annäherung der beiden Ventilsitze und eine weitere Verkleinerung des Hohlraums erlaubt.

Die Maßnahme, daß der erste Schließer ein becherförmiges Becherteil aufweist, das koaxial im Kragenabschnitt des Mantelteils angeordnet ist, und daß ein erster Endabschnitt des Dichtelements zwischen einem umlaufenden Rand des Mantelteils und einem umlaufenden Rand des Becherteils dichtend eingeklemmt ist, gewährleistet eine einfache und dichte Befestigung des Dichtelements.

Eine einfache und vorteilhafte Ausgestaltung der Dichtfunktion des ersten Schließers sieht vor, daß der umlaufende Rand des Becherteils axial gegenüber dem Rand des Mantelteils vorspringt und daß eine erste umlaufende Dichtfläche des Dichtelements im Bereich des vorspringenden Randes angeordnet ist, so daß sie von diesem an einen ersten Ventilsitz axial andrückbar ist. Die Dichtfläche ist dabei durch ihre radial innere Anordnung mit Vorteil so weit wie möglich in die Nähe des anderen Schließers gerückt, so daß der Hohlraum weiter verkleinert werden kann.

Eine vorteilhaft kompakte Form des zweiten Schließers mit "weichen" Oberflächenkonturen, die den daran vorbeifließenden Substanzen wenig Widerstand entgegensetzt, erhält man durch die Merkmalskombination, daß der zweite Schließer ein koaxial am Kopfteil angeordnetes Hutteil aufweist, das eine geringere radiale Ausdehnung als das Kopfteil hat, und daß ein zweiter Endabschnitt des Dichtelements zwischen einem umlaufenden Rand des Kopfteils und einem umlaufenden Rand des Hutteils dichtend eingeklemmt ist.

Eine vorteilhafte Ausgestaltung des zweiten Dichtsitzes sieht vor, daß eine zweite umlaufende Dichtfläche des Dichtelements radial außerhalb des Hutteils im Bereich eines umlaufenden Vorsprungs des Kopfteils angeordnet ist, so daß sie von diesem an einen zweiten Ventilsitz axial andrückbar ist. Durch diese Maßnahme wird die zweite Dichtflache so weit wie möglich in die Nähe des ersten Schließers gerückt.

Durch die Maßnahme, daß der umlaufende Vorsprung und die zweite Dichtfläche zur Ventilachse geneigt angeordnet sind, vorzugsweise im Winkelbereich von etwa 45 Grad, kann die von den zu verarbeitenden Substanzen umströmte Außenkontur des zweiten Schließers noch "weicher" gestaltet werden.

In weiterer Ausgestaltung der Erfindung ist vorgesehen, daß das Kopfteil des zweiten Schließers eine umlaufende Rinne mit U-förmigem Profil aufweist, in der der Rollmembranabschnitt des Dichtelements Aufnahme findet. Diese Maßnahme gewährleistet einerseits einen optimalen Schutz der Rollmembran und ermöglicht andererseits eine weitere Verkleinerung des Leckagehohlraums.

Die der Rinne gegenüberliegenden Wände des Ventilgehäuses können jetzt mit Vorteil für die Strömungsverhältnisse glatt ausgestaltet sein. Der erfindungsgemäß ausgestaltete Hohlraum wird nicht mehr wie der bekannte Leckagehohlraum durch eine Ausbuchtung des Ventilgehäuses gebildet. Er ist in den zweiten Schließer hinein verschoben und besteht nur noch aus dem ringförmigen Hohlraum, der auf der einen Seite von der glatten Gehäusewand und auf der anderen Seite von dem Rollmembranabschnitt des Dichtelements begrenzt wird. Wenn bei geöffnetem Ventil die aus den beiden Schließern bestehende Einheit nach oben von der Gehäusewand abgehoben ist, bleibt nichts Hohlraumartiges an der Gehäusewand zurück. Die maximale Breite der freien Durchgangsöffnung, die auch die maximal passierbare Partikelgröße begrenzt, wird allein durch die Größe des axialen Hubs der aus den beiden Schließern bestehenden Einheit bestimmt.

Um eine Beschädigung des Dichtelements beim Betrieb des Ventils zu vermeiden ist vorgesehen, daß ein gegenseitiges Verdrehen der beiden Schließer durch mindestens einen axial angeordneten Stift verhindert wird, der an dem einen Schließer starr befestigt und in einer Öffnung des anderen Schließers axial gleitend angeordnet ist.

In weiterer Ausgestaltung des Doppelsitzventils ist vorgesehen, daß der Kragenabschnitt des Mantelteils des ersten Schließers in einen verengten Halsabschnitt übergeht, der an einer flexiblen Membran befestigt ist, die sich vom Halsabschnitt aus im wesentlichen radial erstreckt und den Schließer gegenüber dem Ventilgehäuse abdichtet sowie seine axiale Beweglichkeit gewährleistet. Durch diese Konstruktion wird die zum vollständigen Öffnen des Ventils erforderliche axiale Beweglichkeit der aus den beiden Schließern bestehenden Einheit gewährleistet, wobei die Nachteile eines beim bekannten Doppelsitzventil verwendeten Faltenbalgs - große axiale Baulänge und große, schlecht zu reinigende Oberfläche - vermieden werden. Das erfindungsgemäße Doppelsitzventil kann wegen der geringeren Anforderungen an die axiale Bauhöhe ein flacheres und weniger voluminöses Gehäuse aufweisen, das vorteilhaft kompakt, kostengünstiger herstellbar und leichter zu reinigen ist.

In Ausgestaltung der Betätigungsvorrichtung ist am zweiten Schließer eine radial innerhalb des ersten Schließers konzentrisch angeordnete Betätigungsstange befestigt, die an ihrem anderen Ende mit einer pneumatischen Betätigungsvorrichtung verbunden ist. Durch diese Maßnahme zur Betätigung des zweiten Schließers wird die Durchführung von Betatigungselementen in den sterilen Innenraum des Ventilgehäuses und die damit verbundenen Dichtungsprobleme vermieden.

Wenn die in Bezug auf den Druck im Durchgangsbereich wirksamen Flächen der Membran und des ersten Schließers im wesentlichen gleich sind, so ist die Ventilanordnung hydraulisch im wesentlichen ausgeglichen, so daß etwa auftretende Druckänderungen im Durchgangsbereich nicht zu einem "Lüften" des ersten Ventilsitzes führen können. Dadurch wird die Ventilanordnung unempfindlich gegenüber Druckschlägen in der Prozeßanlage.

Die Maßnahme, daß die Betätigungseinrichtung eine weitere Kolben-Zylinder-Einheitaufweist, die auf das außerhalb der Membran gelegene Ende des Mantelteils des ersten Schließers einwirkt und ein Anlüften des ersten Ventilsitzes erlaubt, während der zweite Ventilsitz geschlossen ist, ermöglicht eine Verbindung zwischen dem Hohlraum und dem Durchgangsbereich für Reinigungs- und Desinfektionszwecke.

In Ausgestaltung der Erfindung ist wirkungsmäßig zwischen dem zweiten Schließer und dem ersten Schließer eine Feder angeordnet, durch die beim Andruck des zweiten Schließers an den zweiten Ventilsitz eine Andruckkraft auf den ersten Schließer an den ersten Ventilsitz ausgeübt wird. Dadurch wird auf einfache Weise ein sicherer Verschluß beider Ventilsitze erzielt, wenn nur ein Schließer, nämlich der zweite angedrückt wird. Zum Schließen beider Ventilsitze ist dann nur eine Betätigungsvorrichtung für einen Schließer erforderlich. Eine ansonsten zur Betätigung des ersten Schließers etwa erforderliche weitere Betätigungsstange kann mit Vorteil eingespart werden.

Die Anordnung der genannten Feder im Innenraum des ersten Schließers hat den Vorteil, daß man einen kompakten zylindrischen Aufbau erhält, bei dem die Feder nicht mit der aseptischen Substanz im Durchgangsbereich des Ventils in Berührung kommen kann, da ja der Innenraum der Schließer durch das zwischen den Schließern angeordnete Dichtelement gegenüber dem Durchgangsbereich abgedichtet ist.

Wenn der zweite Schließer durch Anheben der Betätigungsstange anlüftbar ist, während die Tellerfeder den ersten Schließer an den ersten Ventilsitz angedrückt hält, kann auf zusätzliche Betätigungsmittel zum Anlüften des ersten Schließers verzichtet werden.

Wenn in den Leckagehohlraum zwei Reinigungsanschlüsse münden, die mit zwei Reinigungsventilen verschließbar sind, kann der Leckagehohlraum auch bei vollständig geschlossenen Ventilsitzen vom Reinigungsmedium durchströmt werden.

Durch die Maßnahme, daß die Ventilsitze der Reinigungsventile in unmittelbarer Nähe zu den Einmündungen in den Leckagehohlraum angeordnet sind, wird das Volumen des Leckagehohlraums minimiert und die Kontur der Ventilgehäuseinnenwand weiter geglättet.

Weitere Vorteile und Einzelheiten der Erfindung ergeben sich aus der nachfolgenden Beschreibung eines Ausführungsbeispiels anhand der Zeichnungen.

Die Figuren zeigen im einzelnen:
- Figur 1: eine geschnittene Darstellung eines erfindungsgemäßen Doppelsitzventils im vollständig geschlossenen Zustand;
- Figur 2: das Ventil von Figur 1 im vollständig geöffneten Zustand;
- Figur 3: das Ventil von Figur 1 im teilweise geöffneten Zustand, bei dem der zweite Schließer "gelüftet" ist,
- Figur 4: eine geschnittene Darstellung einer anderen Ausführungform des erfindungsgemäßen Ventils im geschlossenen Zustand.

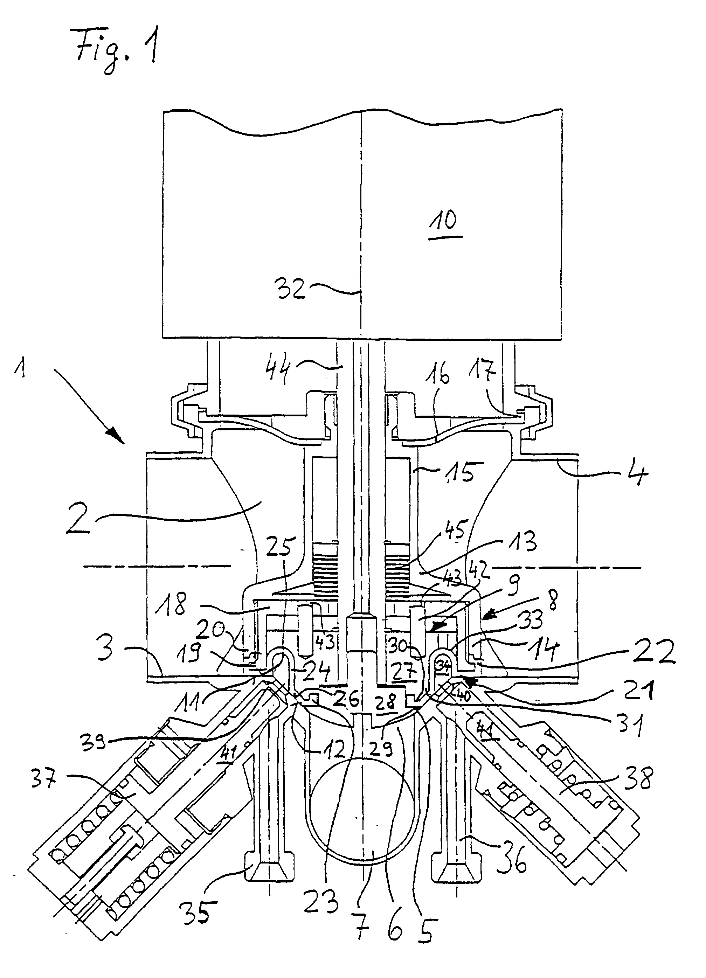

Das in den Figuren 1 bis 3 dargestellte Doppelsitzventil besitzt ein Ventilgehäuse 1 mit einem zum Durchfluß einer Substanz bestimmten, nicht verschließbaren zentralen Durchgangsbereich 2, der in zwei gegenüberliegend angeordnete Rohrleitungsstutzen 3, 4 übergeht. Nach unten schließt sich an den Durchgangsbereich 2 eine konische Ausbuchtung 5 an, die über eine große mittige Öffnung 6 in eine Abzweigleitung 7 mündet.

Im Durchgangsbereich 2 ist eine aus zwei Schließern 8, 9 bestehende, axial verschiebbare Schließeinheit untergebracht, die bei geschlossenem Ventil in die Ausbuchtung 5 hineinragt und die Öffnung 6 verschließt, so daß die Abzweigleitung 7 vom Durchgangsbereich 2 abgetrennt ist. Die Schließer 8, 9 können durch eine auf das Ventilgehäuse 1 aufgesetzte pneumatische Betatigungsvorrichtung 10, bis zu einem gewissen Grad unabhängig voneinander, axial angehoben oder abgesenkt werden.

In einem ebenen Bodenabschnitt des Durchgangsbereichs 2 ist ein erster ringförmiger Ventilsitz 11 ausgebildet, der den oberen Rand der Ausbuchtung 5 eng umschließt. In der konischen Ausbuchtung 5 ist ein zweiter Ventilsitz 12 ausgebildet, der den Rand der Öffnung 6 umschließt. In Bezug auf die Fließrichtung vom Durchgangsbereich 2 zur Abzweigleitung 7 oder umgekehrt sind die beiden koaxialen Ventilsitze 11, 12 hintereinander in Serie angeordnet. Mit dem ersten Ventilsitz 11 wirkt der erste Schließer 8, mit dem zweiten Ventilsitz 12 der zweite Schließer 9 dichtend zusammen.

Der erste Schließer 8 weist ein Mantelteil 13 auf, das aus einem becherförmig erweiterten Kragenabschnitt 14 und einem verengten Halsabschnitt 15 besteht, die ineinander übergehen. Der Halsabschnitt 15 ist an seinem oberen Ende mit einer flexiblen Membran 16 verbunden, die sich vom Halsabschnitt 15 ausgehend radial nach außen erstreckt und an ihrem äußeren Rand 17 mit dem Ventilgehäuse 1 fest verbunden ist. Aufgrund ihrer relativ breiten radialen Erstreckung gewährleistet die Membran 16 einen großen axialen Hub des ersten Schließers 8.

Weiterhin gehört zum ersten Schließer 8 ein Becherteil 18, das koaxial in den erweiterten Kragenabschnitt 14 des Mantelteil 13 eingeschraubt ist. Ein in den Zeichnungen nach unten weisender umlaufender Rand 19 des Becherteils 18 ist radial nach außen in Richtung auf den benachbarten umlaufenden Rand 20 des Kragenabschnitts 14 hin umgebogen und steht axial etwas über diesen hervor, so daß zwischen den Rändern 19, 20 ein Spalt entsteht. In diesem Spalt ist ein umlaufender Endabschnitt 22 eines Dichtelements 21 eingeklemmt.

Das einstückige Dichtelement 21 besitzt ein in den Zeichnungen erkennbares Profil, das ringförmig umlaufend ausgestaltet ist und aus Gummi besteht. Neben dem ersten Endabschnitt 22 besitzt das Dichtelement 21 noch einen zweiten Endabschnitt 23 und einen die beiden Endabschnitte 22, 23 verbindenden Rollmembranabschnitt 24. Am ersten Endabschnitt 22 ist im Bereich des radial nach außen umgebogenen Randes 19 des Becherteils 18 eine erste Dichtfläche 25 ausgebildet, die bei Betätigung des ersten Schließers 8 durch den Rand 19 an den ersten Ventilsitz 11 andrückbar ist.

Der zweite Schließer 9 besitzt ein Kopfteil 27, das radial innerhalb des Becherteils 18 des ersten Schließers 8 und relativ zu diesem axial verschiebbar angeordnet ist. Weiterhin besitzt der zweite Schließer 9 ein Hutteil 28, das koaxial am Kopfteil 27 angeordnet und mit diesem verbunden ist. Das Hutteil 28 hat eine geringere radiale Ausdehnung als das Kopfteil 27 und ragt in axialer Richtung (in den Zeichnungen nach unten) mit einem im wesentlichen kugelkalottenförmigen Abschnitt über das Kopfteil 27 hinaus. Zwischen einem umlaufenden Rand 30 dieses Abschnitts des Kopfteils 27 und einem Rand 29 des Hutteils 27 ist ein Spalt ausgebildet, in dem der zweite Endabschnitt 23 des Dichtelements 21 eingeklemmt ist.

Direkt angrenzend an den genannten Spalt, radial außerhalb des Hutteils 28 ist am Kopfteil 27 ein umlaufender Vorsprung 31 ausgebildet, der um etwa 45 Grad zur Ventilachse 32 abgeschrägt ist. Im Bereich dieses Vorsprungs 31 ist am Dichtelement 21 eine zweite umlaufende Dichtfläche 26 ausgebildet, die bei Betätigung des zweiten Schließers 9 durch den Vorsprung 31 an den zweiten Ventilsitz 12 angedruckt wird.

Das Kopfteil 27 des zweiten Schließers 9 weist eine umlaufende Rinne 33 mit U-förmigem Profil auf, in der der Rollmembranabschnitt 24 des Dichtelements 21 Aufnahme findet.

Im vollständig geschlossenen Zustand des Doppelsitzventils werden die beiden Dichtflächen 25, 26 des Dichtelements 21 durch die beiden Schließer 8, 9 fest an die beiden Ventilsitze 11, 12 angedrückt (Figur 1). Zwischen den beiden Ventilsitzen 11, 12 wird dabei ein Hohlraum 34 (auf der einen Seite vom Durchgangsbereich 2 und auf der anderen Seite von der Abzweigleitung 7) abgetrennt. Im unteren Bereich wird der Hohlraum 34 durch die konische Wand der Ausbuchtung 5 und im oberen Bereich durch den Rollmembranabschnitt 24 des Dichtelements 21 begrenzt. Sein Volumen und seine Innenflächen sind dadurch auf ein Minimum reduziert.

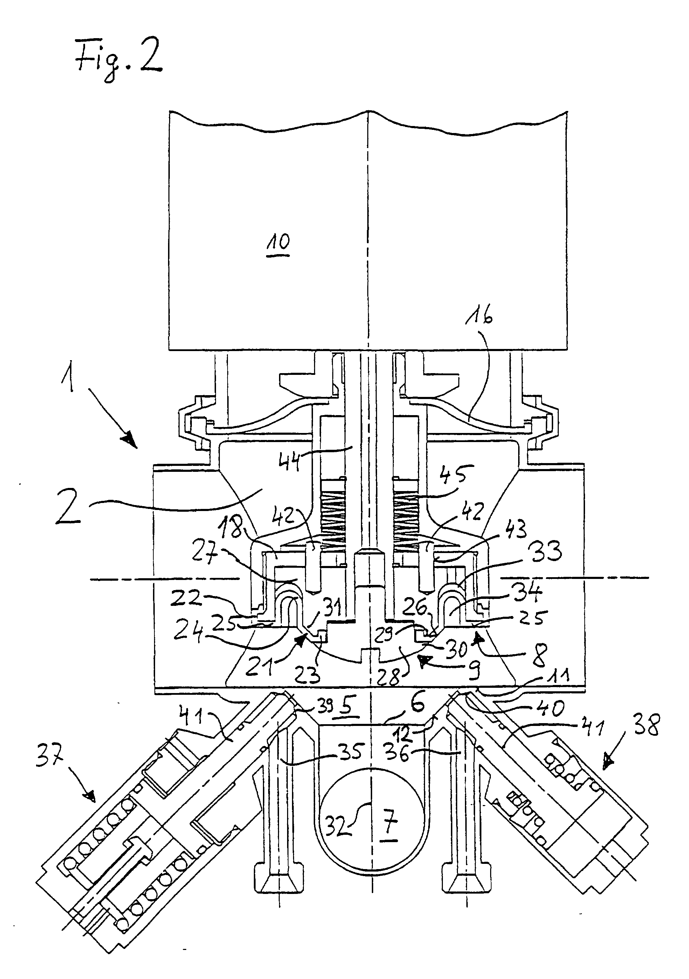

In den Hohlraum 34 münden zwei Reinigungsanschlüsse 35, 36, die mittels zweier Reinigungsventile 37, 38 verschließbar sind. Die Reinigungsventile 37, 38 haben Ventilsitze 39, 40, die in unmittelbarer Nähe zur Einmündung in den Hohlraum 34 angeordnet sind. Bei geschlossenem Reinigungsventil 37, 38 (Figur 2) wird ein Ventilverschluß 41 an den Ventilsitz 39, 40 angedrückt, so daß zwischen dem Ventilverschluß 41 und der konischen Innenwand des Hohlraums 34 nur noch ein vernachlässigbar kleiner Hohlraum verbleibt, der zum Gesamtvolumen und zur Gesamtinnenfläche des Hohlraums 34 kaum etwas beiträgt.

Um ein relatives Verdrehen der beiden Schließer 8, 9 zu verhindern, sind am Kopfteil 27 des zweiten Schließers 9 zwei Stifte 42 befestigt, die axial gleitend in zwei Öffnungen 43 des Becherteils 18 des ersten Schließers 8 eingreifen. Dadurch wird die relative axiale Verschiebbarkeit der Schließer 8, 9 nicht beeinträchtigt.

Die pneumatische Betätigungsvorrichtung 10 enthält eine in den Figuren nicht dargestellte, doppeltwirkende pneumatische Kolben-Zylinder-Einheit, die auf eine radial innerhalb des ersten Schließers 8 konzentrisch angeordnete Betätigungsstange 44 einwirkt und diese in beide Axialrichtungen nach oben oder nach unten verschieben kann. Die Betätigungsstange 44 ist fest mit dem zweiten Schließer 9 verbunden und wirkt über ein Tellerfederpacket, im folgenden kurz Tellerfeder 45 genannt, auch elastisch auf den ersten Schließer 8 ein.

Die Tellerfeder 45 ist im Innenraum des ersten Schließers 8 angeordnet. Dadurch erhält man einerseits einen kompakten zylindrischen Aufbau und erzielt außerdem den Vorteil, daß die Tellerfeder 45 nicht mit der aseptischen Substanz im Durchgangsbereich 2 in Berührung kommen kommt, da ja der Innenraum des Schließers 8 durch das zwischen den beiden Schließern 8, 9 angeordnete Dichtelement 21 gegenüber dem Durchgangsbereich 2 abgedichtet ist. Probleme mit der Reinigung und Desinfektion der zerklüftet ausgestalteten Tellerfeder 45 können also garnicht erst auftreten.

Bei der in Figur 1 gezeigten vollständig geschlossenen Stellung beider Ventilsitze 11, 12 drückt die Betätigungsstange 44 axial nach unten. Sie wirkt dabei direkt auf den zweiten Schließer 9, der also ebenfalls nach unten drückt und dabei die zweite Dichtfläche 26 des Dichtelements 21 fest in den zweiten Ventilsitz 12 preßt. Die Betätigungsstange 44 druckt aber auch axial von oben auf die Tellerfeder 45, die in dieser Stellung vorgespannt ist und daher die axiale Kraft an ihrem unteren Ende an das Becherteil 18 des ersten Schließers 8 weitergibt. Das Becherteil 18 preßt daraufhin seinerseits die erste Dichtfläche 25 des Dichtelements 21 gegen den ersten Ventilsitz 11. Somit sind beide Ventilsitze 11, 12 fest geschlossen, obwohl nur der zweite Schließer 9 betätigt wird. Zum Schließen beider Ventilsitze 11, 12 ist nur eine einzige Betätigungsvorrichtung mit einer einzigen Betätigungsstange 44 erforderlich.

Der Hohlraum 34 kann in dieser Ventilstellung gereinigt oder desinfiziert werden, ohne daß das Reinigungsmedium in den angrenzenden Durchgangsbereich 2 oder die Abzweigleitung 7 gelangt. Die angrenzenden Bereiche können auch wahrend des Reinigungsvorgangs mit der zu verarbeitenden sterilen Substanz gefüllt bleiben, ohne daß diese mit dem Reinigungsmedium in Berührung kommt.

Zur Reinigung werden dann die beiden Reinigungsventile 37, 38 geöffnet und der Hohlraum 34 gespült, beispielsweise mit heißem Dampf, der an dem einen Reinigungsanschluß 35 eintritt und an dem anderen Reinigungsanschluß 36 austritt. Wegen der äußerst kleinen Innenfläche des Hohlraums 34 muß auch bei längerer Dampfeinwirkung nicht mit einer Überhitzung des Ventilgehäuses 1 gerechnet werden.

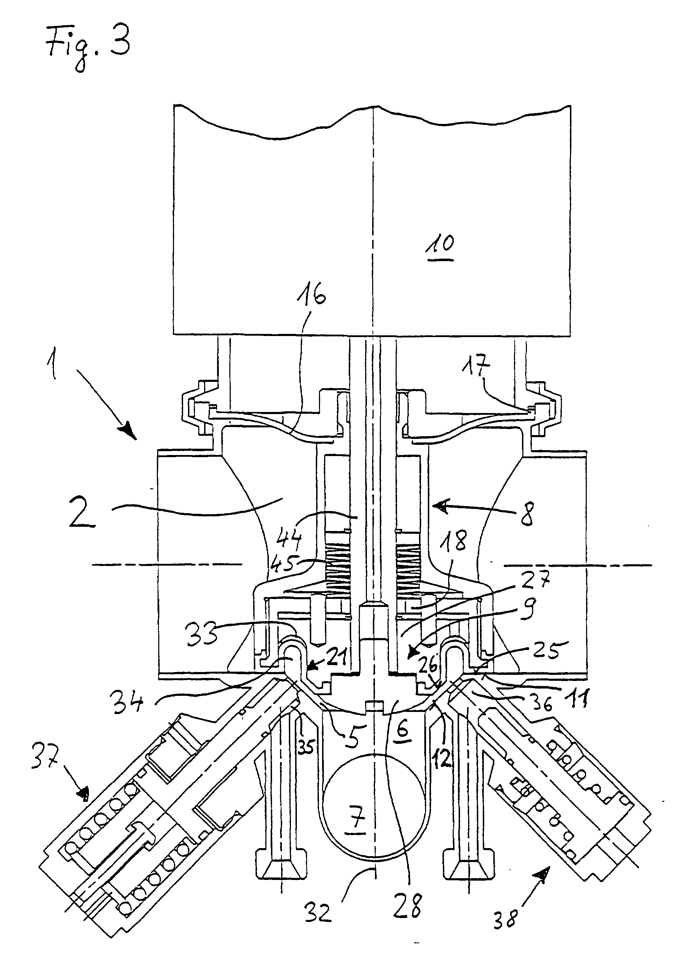

Um den zweiten Ventilsitz 12 wie in Figur 3 gezeigt geringfügig zu öffnen ("anzulüften"), wird die Betätigungsstange 44 durch die Betätigungsvorrichtung 10 axial nach oben gezogen. Sie wirkt wieder direkt auf den zweiten Schließer 9, den sie mit nach oben zieht. Dabei drückt die Tellerfeder 45 aber noch nach unten gegen das Becherteil 18, welches daher zunächst die axiale Aufwärtsbewegung nicht mitmacht. Als Folge gleitet der zweite Schließer 9 relativ zu dem feststehenden ersten Schließers 8 axial nach oben, bis die Oberseite des Kopfteils 27 gegen das Becherteil 18 stößt. Wenn die Betätigungsstange 44 in dieser Stellung verbleibt und sich nicht weiterbewegt, ist nur der zweite Ventilsitz 12 leicht geöffnet. Der erste Ventilsitz 11 bleibt geschlossen. Die erste Dichtfläche 25 des Dichtelements 21 wird durch die verbleibende Kraft der Tellerfeder 45 weiterhin an den ersten Ventilsitz 11 angepreßt.

In dieser Ventilstellung kann eines oder beide Reinigungsventile 37, 38 geöffnet und neben dem Hohlraum 34 auch der zweite Ventilsitz 12 sowie die zweite Dichtfläche 26 gereinigt und desinfiziert werden. Dabei gelangt das Reinigungsmedium nicht in den durch den ersten Ventilsitz 11 abgetrennten Durchgangsbereich 2, der weiterhin mit der zu verarbeitenden Substanz gefüllt bleiben kann.

Um die beiden Ventilsitze 11, 12 wie in Figur 2 gezeigt vollständig zu öffnen, wird die Betätigungsstange 44 zunächst wie oben beschrieben angehoben, dann aber über die in Figur 3 gezeigte Stellung hinaus axial weiterbewegt. Wegen der Anlage des Kopfteil 27 des zweiten Schließers 9 am Becherteil 18 des ersten Schließers 8 wird der letztgenannte beim weiteren axialen Verschieben der Betätigungsstange 44 ebenfall mit nach oben gezogen, so daß sich auch der erste Ventilsitz 11 öffnet.

Die Axialbewegung der aus den beiden Schließern 8, 9 bestehende Einheit ist nach oben nur durch den Elastizitätsbereich der Membran 16 begrenzt. Wegen der geringen axialen Erstreckung der Ausbuchtung 5 und des darin einzuführenden zweiten Schließers 9 öffnet sich aber bereits bei einem relativ kleinen axialer Hub der genannten Einheit ein relativ breiter Durchgang für die zu verarbeitende Substanz, so daß auch größere darin enthaltene Partikel keine Probleme bereiten.

Außerdem fordern die im wesentlichen fließenden Konturen der Ausbuchtung 5 und der Unterseite der Schließeinheit ein unbehindertes und glattes Vorbeifließen. Die zu verarbeitenden Substanz muß hier mit Vorteil keinen Leckagehohlraum durchqueren, weil dieser aufgrund der Erfindung beim vollstandigen Öffnen des Ventils aus dem Durchflußbereich automatisch entfernt wird und daher für die vorbeifließende Substanz "nicht mehr existiert".

Ein alleiniges Öffnen des ersten Ventilsitzes 11 bei geschlossenem zweiten Ventilsitz 12 ist bei dem in den Figuren gezeigten Ausführungsbeispiel nicht vorgesehen. Selbstverständlich kann aber ein erfindungsgemäßes Doppelsitzventil auch mit dieser Betätigungsvariante ausgestattet sein. Beispielsweise könnte die gezeigte Konstruktion auf einfach Weise so abgeändert werden, daß die Betätigungsvorrichtung 10 um eine weitere pneumatische Kolben-Zylinder-Einheit ergänzt wird, die auf das außerhalb der Membran 16 gelegene Ende des Mantelteis 13 des ersten Schließers 8 einwirkt. Wenn außerdem die Anordnung der Tellerfeder 45 geringfügig modifiziert würde, so daß diese aus der in Figur 1 gezeigten Stellung noch weiter zusammenpreßbar wäre, so könnte der erste Schließer 8 mittels der weiteren pneumatischen Kolben-Zylinder-Einheit aus dem ersten Ventilsitz 11 "angelüftet" werden, wobei die Betätigungsstange 44 gleichzeitig den zweiten Schließer 9 im zweiten Ventilsitz 12 angepreßt hält.

Ein "Lüften" des ersten Schließers 8 vom ersten Ventilsitze 11 kann aber auch dadurch erreicht werden, daß man einen Druckunterschied zwischen dem auf der Innenseite der Membran 16 gelegenen Durchgangsbereich 2 und dem auf der Außenseite der Membran 16 gelegenen Raum der Betätigungsvorrichtung 10 erzeugt. Damit kann dann auch der erste Schließer 8 unabhängig vom zweiten Schließer 9 einen Hub ausführen. Zusätzliche mechanische Mittel am ersten Schließer 8 selbst sind dazu nicht erforderlich. Lediglich die pneumatische Betätigungsvorrichtung 10 muß derart modifiziert werden, daß sie den genannten Druckunterschied erzeugen kann. Für diesen Zweck wird insbesondere eine Druckabsenkung in dem auf der Außenseite der Membran 16 gelegenen Raum infrage kommen.

Die in Bezug auf den Druck im Durchgangsbereich 2 wirksame Fläche der Membran 16 weicht nur unwesentlichen von der durch den ersten Ventilsitz 11 bestimmten, hydraulisch wirksamen Fläche des ersten Schließers 8 ab. Dadurch wird die Ventilanordnung relativ unempfindlich gegenüber Druckschlägen in der Prozeßanlage. Wenn etwa im Durchgangsbereich stärkere Druckänderungen auftreten, so wirkt der hydraulische Druck einerseits direkt auf den ersten Schließer 8, der dadurch nach unten an seinen Ventilsitz 11 gedrückt würde. Andererseits wirkt der hydraulische Druck aber auch auf die Membran 16, die dabei nach oben gedrückt wird und folglich den fest mit ihr verbundenen ersten Schließer 8 nach oben zieht. Wenn die genannten wirksamen Flächen nicht zu sehr voneinander abweichen, so heben sich die nach oben und nach unten gerichteten Kräfte ungefähr auf, so daß ein Abheben des ersten Schließers 8 vom ersten Ventilsitz 11 nicht befurchtet werden muß.

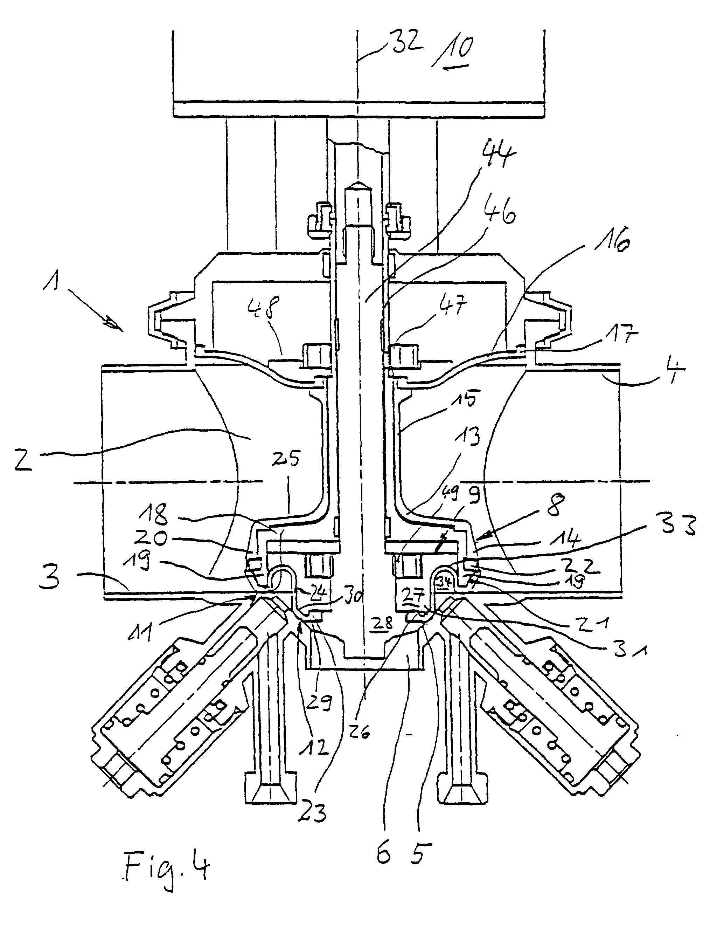

Die Ausführung des erfindungsgemäßen Ventils gemäß Figur 4 unterscheidet sich von der in Figuren 1 bis 3 beschriebenen Form im wesentlichen dadurch, daß auch der erste Schließer 8 einen Teilhub zur Reinigung des ersten Ventilsitzes 11 ausführen kann. Zu diesem Zweck ist auf die Tellerfeder 45 (Figuren 1-3) verzichtet worden und eine zweite Betätigungsstange 46 nach außen in die pneumatische Betätigungseinrichtung 10 geführt worden. Die Betätigungsstange 44 ist fest mit Becherteil 18 verbunden und durchsetzt teleskopisch die zweite Betätigungsstange 46. Bei Bedarf kann die Tellerfeder 45 dann in der Betätigungseinrichtung 10 vorgesehen werden, wie beispielsweise in DE-C-195 48 860 beschrieben. Die beiden Betätigungsstangen 44 und 46 erlauben somit getrennt voneinander ausführbare Teilhübe zum Reinigen der Sitzflächen.

Die Membran 16 ist mittels Mutter 47 zwischen Platte 48 und oberer Endfläche des Halsabschnitts 15 eingespannt. Zu diesem Zweck tragt die Betätigungsstange 46 einen entsprechenden Abschnitt mit Außengewinde.

Das Kopfteil 27 wird mittels einer Mutter 49 mit dem Hutteil 28 verspannt. Dazu ist ein entsprechender Außengewindeabschnitt auf dem Hutteil 28 vorgesehen. Für den Eingriff eines geeigneten Spannwerkzeuges zum Anziehen der Mutter 49 weist diese Bohrungen 50 auf.

### Bezugszeichenliste

- 1: Ventilgehäuse
- 2: Durchgangsbereich
- 3: Rohrleitungsstutzen
- 4: Rohrleitungsstutzen
- 5: Ausbuchtung
- 6: Öffnung
- 7: Abzweigleitung
- 8: erster Schließer
- 9: zweiter Schließer
- 10: Betätigungsvorrichtung
- 11: erster Ventilsitz
- 12: zweiter Ventilsitz
- 13: Mantelteil
- 14: Kragenabschnitt
- 15: Halsabschnitt
- 16: Membran
- 17: Rand
- 18: Becherteil
- 19: Rand
- 20: Rand
- 21: Dichtelement
- 22: erster Endabschnitt
- 23: zweiter Endabschnitt
- 24: Rollmembranabschnitt
- 25: erste Dichtfläche
- 26: zweite Dichtfläche
- 27: Kopfteil
- 28: Hutteil
- 29: Rand
- 30: Rand
- 31: Vorsprung
- 32: Ventilachse
- 33: Rinne
- 34: Hohlraum
- 35: Reinigungsanschluß
- 36: Reinigungsanschluß
- 37: Reinigungsventil
- 38: Reinigungsventil
- 39: Ventilsitz
- 40: Ventilsitz
- 41: Ventilverschluß
- 42: Stift
- 43: Öffnung
- 44: Betätigungsstange
- 45: Tellerfeder
- 46: zweite Betätigungsstange
- 47: Mutter
- 48: Platte
- 49: Mutter
- 50: Bohrungen

## Patentansprüche

1. Doppelsitzventil, insbesondere für aseptische Anwendungszwecke, mit mindestens zwei Leitungsanschlüssen (3, 4, 7), zwischen denen zwei ringförmige Ventilsitze (11,12) koaxial zueinander und in Serie angeordnet sind, mit zwei unabhängig voneinander axial verschiebbaren Schließern (8, 9), die im geschlossenen Zustand mit den Ventilsitzen (11, 12) dichtend zusammenwirken und einen Hohlraum (34) zwischen sich einschließen, und mit mindestens einem in den Hohlraum (34) mündenden Reinigungsanschluß (35, 36) für die Einleitung eines Reinigungsmediums, **dadurch gekennzeichnet, daß** ein einstückiges, ringförmig umlaufend ausgestaltetes, elastisches Dichtelement (21) mit seinen beiden Endabschnitten (22, 23) an den beiden Schließern (8, 9) jeweils dichtend befestigt ist, wobei an jeden Endabschnitt (22, 23) angrenzend eine Dichtfläche (25, 26) ausgebildet ist, die durch einen Schließer (8, 9) an den zugehörigen Ventilsitz (11, 12) andrückbar ist, und daß das Dichtelement (21) einen die beiden Endabschnitte (22, 23) miteinander verbindenden Rollmembranabschnitt (24) besitzt, der den Hohlraum (34) begrenzt.

2. Doppelsitzventil nach Anspruch 1, **dadurch gekennzeichnet, daß** ein erster Schließer (8) ein Mantelteil (13) aufweist, dessen Ende zu einem Kragenabschnitt (14) becherförmig erweitert ist, und daß ein zweiter Schließer (9) ein Kopfteil (27) besitzt, das radial innerhalb des Kragenabschnitts (14) angeordnet ist.

3. Doppelsitzventil nach Anspruch 2, **dadurch gekennzeichnet, daß** der erste Schließer (8) ein becherförmiges Becherteil (18) aufweist, das koaxial im Kragenabschnitt (14) des Mantelteils (13) angeordnet ist, und daß ein erster Endabschnitt (22) des Dichtelements (21) zwischen einem umlaufenden Rand (20) des Mantelteils (14) und einem umlaufenden Rand (19) des Becherteils (18) dichtend eingeklemmt ist.

4. Doppelsitzventil nach Anspruch 3, **dadurch gekennzeichnet, daß** der umlaufende Rand (19) des Becherteils (18) axial gegenüber dem Rand (20) des Mantelteils (13) vorspringt und daß eine erste umlaufende Dichtfläche (25) des Dichtelements (21) im Bereich des vorspringenden Randes (20) angeordnet ist, so daß sie von diesem an einen ersten Ventilsitz (11) axial andruckbar ist.

5. Doppelsitzventil nach einem der vorhergehenden Ansprüche, **dadurch gekennzeichnet, daß** der zweite Schließer (9) ein koaxial am Kopfteil (27) angeordnetes Hutteil (28) aufweist, das eine geringere radiale Ausdehnung als das Kopfteil (27) hat, und daß ein zweiter Endabschnitt (23) des Dichtelements (21) zwischen einem umlaufenden Rand (29) des Kopfteils (27) und einem umlaufenden Rand (30) des Hutteils (28) dichtend eingeklemmt ist.

6. Doppelsitzventil nach Anspruch 5, **dadurch gekennzeichnet, daß** eine zweite umlaufende Dichtfläche (26) des Dichtelements (21) radial außerhalb des Hutteils (28) im Bereich eines umlaufenden Vorsprungs (31) des Kopfteils (27) angeordnet ist, so daß sie von diesem an einen zweiten Ventilsitz (12) axial andruckbar ist.

7. Doppelsitzventil nach Anspruch 6, **dadurch gekennzeichnet, daß** der umlaufende Vorsprung (31) und die zweite Dichtfläche (26) zur Ventilachse (32) geneigt angeordnet sind, vorzugsweise im Winkelbereich von etwa 45 Grad.

8. Doppelsitzventil nach einem der Anspruche 2 bis 7, **dadurch gekennzeichnet, daß** das Kopfteil (27) des zweiten Schließers (9) eine umlaufende Rinne (33) mit U-förmigem Profil aufweist, in der der Rollmembranabschnitt (24) des Dichtelements (21) Aufnahme findet.

9. Doppelsitzventil nach Anspruch 8, **dadurch gekennzeichnet, daß** die der Rinne (33) gegenüberliegende Gehäusewand im wesentlichen glatt ausgestaltet ist, so daß ein Hohlraum (34) am Ventilgehäuse (1) nur bei geschlossenem Ventil existiert.

10. Doppelsitzventil nach einem der vorhergehenden Ansprüche, **dadurch gekennzeichnet, daß** ein gegenseitiges Verdrehen der beiden Schließer (8, 9) durch mindestens einen axial angeordneten Stift (42) verhindert wird, der an dem einen Schließer (9) starr befestigt und in einer Öffnung (43) des anderen Schließers (8) axial gleitend angeordnet ist.

11. Doppelsitzventil nach einem der Ansprüche 2 bis 10, **dadurch gekennzeichnet, daß** der Kragenabschnitt (14) des Mantelteils (13) des ersten Schließers (8) in einen verengten Halsabschnitt (15) übergeht, der an einer flexiblen Membran (16) befestigt ist, die sich vom Halsabschnitt (15) aus im wesentlichen radial erstreckt und den Schließer (8) gegenüber dem Ventilgehäuse (1) abdichtet sowie seine axiale Beweglichkeit gewährleistet.

12. Doppelsitzventil nach Anspruch 11, **dadurch gekennzeichnet, daß** am zweiten Schließer (9) eine radial innerhalb des ersten Schließers (8) konzentrisch angeordnete Betätigungsstange (44) befestigt ist, die an ihrem anderen Ende mit einer pneumatischen Betätigungsvorrichtung (10) verbunden ist.

13. Doppelsitzventil nach Anspruch 11 oder 12, **dadurch gekennzeichnet, daß** die in Bezug auf den Druck im Durchgangsbereich (2) wirksamen Flächen der Membran (16) und des ersten Schließers (8) im wesentlichen gleich sind.

14. Doppelsitzventil nach einem der Ansprüche 11 bis 13, **dadurch gekennzeichnet, daß** die Betätigungseinrichtung (10) eine weitere Kolben-Zylinder-Einheit aufweist, die auf das außerhalb der Membran (16) gelegene Ende des Mantelteils (13) des ersten Schließers (8) einwirkt und ein Anlüften des ersten Ventilsitzes (11) erlaubt, während der zweite Ventilsitz (12) geschlossen ist.

15. Doppelsitzventil nach einem der Ansprüche 12 bis 14, **dadurch gekennzeichnet, daß** wirkungsmäßig zwischen dem zweiten Schließer (9) und dem ersten Schließer (8) eine Feder (45) angeordnet ist, durch die beim Andruck des zweiten Schließers (9) an den zweiten Ventilsitz (12) eine Andruckkraft auf den ersten Schließer (8) an den ersten Ventilsitz (11) ausgeübt wird.

16. Doppelsitzventil nach Anspruch 15, **dadurch gekennzeichnet, daß** die Feder (45) im Innenraum des ersten Schließers (8) angeordnet ist.

17. Doppelsitzventil nach Anspruch 15 oder 16, **dadurch gekennzeichnet, daß** der zweite Schließer (9) durch Anheben der Betatigungsstange (44) anlüftbar ist, während die Tellerfeder (45) den ersten Schließer (8) an den ersten Ventilsitz (11) angedrückt hält.

18. Doppelsitzventil nach einem der vorhergehenden Ansprüche, **dadurch gekennzeichnet, daß** in den Hohlraum (34) zwei Reinigungsanschlüsse (35, 36) münden, die mit zwei Reinigungsventilen (37, 38) verschließbar sind.

19. Doppelsitzventil nach Anspruch 18, **dadurch gekennzeichnet, daß** die Ventilsitze (39, 40) der Reinigungsventile (37, 38) in unmittelbarer Nähe zu den Einmündungen in den Hohlraum (34) angeordnet sind.

## Claims

1. A double seat valve, in particular for aseptic application purposes, with at least two conduit connections (3, 4, 7) between which two annular valve seats (11, 12) are arranged coaxially to one another and in series, with two obturators (8, 9) axially displaceable independently of one another, which in the closed condition sealingly cooperate with the valve seats (11, 12) and between them enclose a cavity (34), and with at least one cleaning connection (35, 36) opening out into the cavity (34), for the introduction of a cleaning medium, **characterised in that** a one-piece, elastic sealing element (21) formed in an annularly circumferential manner, with it two end sections (22, 23) is in each case sealingly fastened to the two obturators (8, 9), wherein a sealing surface (25, 26) is formed bordering each end section (22, 23) and is pressable onto the associated valve seat (11, 12) by an obturator (8, 9), and that the sealing element (21) has a rolling diaphragm section (24) which connects the two end sections (22, 23) to one another and which delimits the cavity (34).

2. A double seat valve according to claim 1, **characterised in that** the first obturator (8) comprises a casing part (13) whose end is widened in a cup-like manner into a collar section (14) and that a second obturator (9) comprises a head part (27) which is arranged radially within the collar section (14).

3. A double seat valve according to claim 2, **characterised in that** the first obturator (8) comprises a cup-like cup part (18) which is arranged coaxially in the collar section (14) of te casing part (13), and that a first end section (22) of the sealing element (21) is clamped between a circumferential edge (20) of the casing part (14) and a circumferential edge (19) of the cup part (18).

4. A double seat valve according to claim 3, **characterised in that** the circumferential edge (19) of the cup part (18) projects axially with respect to the edge (20) of the casing part (13) and that a first circumferential sealing surface (25) of the sealing element (21) is arranged in the region of the projecting edge (20) so that it is axially pressable by this onto a first valve seat (11).

5. A double seat valve according to one of the preceding claims, **characterised in that** the second obturator (9) comprises a hat part (28) which is arranged coaxially on the head part (27) and has a smaller radial extension than the head part (27), and that a second end section (23) of the sealing element (21) is sealingly clamped between a circumferential edge (29) of the head part (27) and a circumferential edge (30) of the hat part (28).

6. A double seat valve according to claim 5, **characterised in that** a second circumferential sealing surface (26) of the sealing element (21) is arranged radially outside the hat part (28) in the region of a circumferential projection (31) of the head part (27) so that it may be axially pressed by this onto a second valve seat (12).

7. A double seat valve according to claim 6, **characterised in that** the circumferential projection (31) and the second sealing surface (26) are arranged inclined to the valve axis (32), preferably at an angular range of about 45 degrees.

8. A double valve seat acording to one of the claims 2 to 7, **characterised in that** the head part (27) of the second obturator (9) comprises a circumferential groove (33) with a U-shaped profile in which the rolling diaphragm section (24) of the sealing element (21) is accommodated.

9. A double seat valve according to claim 8, **characterised in that** the housing wall lying opposite the groove (33) is designed essentially smooth, so that only with a closed valve does there exists a cavity (34) on the valve housing (1).

10. A double seat valve according to one of the preceding claims, **characterised in that** a mutual rotation of the two obturators (8, 9) is prevented by at least one axially arranged pin (42) which is rigidly fastened to the one obturator (9) and is arranged axially sliding in an opening of the other obturator (8).

11. A double seat valve according to one of the claims 2 to 10, **characterised in that** the collar section (14) of the casing part (13) of the first obturator (8) merges into a narrowed neck section (15) which is fastened on a flexible membrane (16) which from the neck section (15) extends essentially radially and seals the obturator (8) with respect to the valve housing (1) as well as ensures it axial movability.

12. A double seat valve according to claim 11, **characterised in that** on the second obturator (9) there is fastened an actuation rod (44) which is concentrically arranged radially within the first obturator (8) and which at its other end is connected to a pneumatic actuation device (10).

13. A double seat valve according to claim 11 or 12, **characterised in that** the effective surfaces of the membrane (16) and of the first obturator (8) with respect to the pressure in the passage region (2) are essentially equal.

14. A double seat valve according to one of the claims 11 to 13, **characterised in that** the actuation means (10) comprises a further piston cylinder unit which acts on the end, lying outside the membrane (16), of the casing part (13) of the first obturator (8) and permits a lifting of the first valve seat (11) whilst the second valve seat (12) is closed.

15. A double seat valve according to one of the claims 12 to 14, **characterised in that** in an acting manner, between the second obturator (9) and the first obturator (8) there is arranged a spring (45) by way of which on pressing the second obturator (9) onto the second valve seat (12) a pressing force is exerted onto to the first obturator (8) onto the first valve seat (11).

16. A double seat valve according to claim 15, **characterised in that** the spring (45) is arranged in the inner space of the first obturator (8).

17. A double seat valve according to claim 15 or 16, **characterised in that** the second obturator (9) may be vented by lifting the actuation rod (44), whilst the disk spring (45) keeps the first obturator (8) pressed onto the first valve seat (1).

18. A double seat valve according to one of the preceding claims, **characterised in that** two cleaning connections (35, 36) open into the cavity (34), which are closable with two cleaning valves (37, 38).

19. A double seat valve according to claim 18, **characterised in that** the valve seats (39, 40) of the cleaning valves (37, 38) are arranged in the direct vicinity of the openings into the cavity (34).

## Revendications

1. Soupape à siège double notamment pour des applications aseptisées, comportant
- au moins deux branchements de conduite (3, 4, 7) entre lesquels on a deux sièges de soupape (11, 12) annulaires, coaxiaux l'un à l'autre et en série,
- deux organes d'obturation (8, 9) coulissant axialement indépendamment l'un de l'autre et qui à l'état fermé, coopèrent de manière étanche avec les sièges de soupape (11, 12) et enferment entre eux une cavité (34), et
- au moins un raccordement de nettoyage (35, 36) débouchant dans la cavité (34) pour y introduire un fluide de nettoyage,
**caractérisée en ce qu'**
un élément d'étanchéité (21), élastique, en une seule pièce, de forme annulaire périphérique, est fixé de manière étanche, par ses deux segments d'extrémité (22, 23) aux deux organes d'obturation (8, 9),
une surface d'étanchéité (25, 26) étant réalisée de manière adjacente à chaque segment d'extrémité (22, 23), cette surface d'étanchéité étant poussée par un organe d'obturation (8, 9) contre le siège de soupape (11, 12) correspondant, et
l'élément d'étanchéité (21) comporte un segment de membrane à déroulement (24) reliant les deux segments d'extrémité (22, 23), et délimitant la cavité 34.

2. Soupape à siège double selon la revendication 1,
**caractérisée en ce qu'**
un premier organe d'obturation (8) comporte une partie enveloppe (13) dont l'extrémité s'élargit en forme de gobelet vers un segment de collerette (14), et
un second organe d'obturation (9) comporte une tête (27) située radialement à l'intérieur du segment de collerette (14).

3. Soupape à siège double selon la revendication 2,
**caractérisée en ce que**
le premier organe d'obturation (8) comporte une partie (18) en forme de gobelet installée coaxialement dans le segment de collerette (14) de la partie en formc d'enveloppe (13), et
un premier segment d'extrémité (22) de l'élément d'étanchéité (21) est serré de manière étanche entre un bord périphérique (20) de la partie en forme d'enveloppe (14) et le bord périphérique (19) de la partie en forme de gobelet (18).

4. Soupape à siège double selon la revendication 3,
**caractérisée en ce que**
le bord périphérique (19) de la partie en forme de gobelet (18) est axialement en saillie par rapport au bord (20) de la partie en forme d'enveloppe (13), et
une première surface d'étanchéité périphérique (25) de l'élément d'étanchéité (21) est prévue dans la zone du bord (20) en saillie de façon à pouvoir être poussée axialement par celui-ci contre un premier siège de soupape (11).

5. Soupape à siège double selon l'une des revendications précédentes,
**caractérisée en ce que**
le second organe d'obturation (9) comporte une partie en forme de chapeau (28) coaxiale à la tête (27) de façon à présenter une extension radiale inférieure à celle de la tète (27) et
un second segment d'extrémité (23) de l'élément d'étanchéité (21) est serré de manière étanche entre un bord périphérique (29) de la tête (27) et un bord périphérique (30) de la partie en forme de chapeau (28).

6. Soupape à siège double selon la revendication 5,
**caractérisée en ce que**
dans la zone d'une partie en saillie (31) périphérique de la tête (27) il a y a une surface d'étanchéité périphérique (26) de l'élément d'étanchéité (21), radialement à l'extérieur de la partie en forme de chapeau (28) pour pouvoir être pressée axialement par la tête contre un second siège de soupape (12).

7. Soupape à siège double selon la revendication 6,
**caractérisée en ce que**
la partie en saillie (31), périphérique et la seconde surface d'étanchéité (26) sont inclinées par rapport à l'axe (32) de la soupape de préférence dans une plage angulaire d'environ 45°.

8. Soupape à siège double selon l'une des revendications 2 à 7,
**caractérisée en ce que**
la tête (27) du second organe d'obturation (9) comporte une gorge périphérique (33) à profil en U recevant le segment de membrane à déroulement (24) de l'élément d'étanchéité (21).

9. Soupape à siège double selon la revendication 8,
**caractérisée en ce que**
la paroi de boîtier en regard de la gorge (33) est essentiellement lisse si bien qu'il n'y aura de cavité (34) dans le boîtier de soupape (1) que lorsque la soupape est fermée.

10. Soupape à siège double selon l'une des revendications précédentes,
**caractérisée en ce qu'**
au moins une broche (42) axiale bloque la rotation réciproque des deux organes d'obturation (8, 9), cette broche étant fixée rigidement à l'un des organes d'obturation (9) et glisse axialement dans une ouverture (43) de l'autre organe d'obturation (8).

11. Soupape à siége double selon l'une des revendications 2 à 10,
**caractérisée en ce que**
le segment de collerette (14) de la partie en forme d'enveloppe (13) du premier organe d'obturation (8) rejoint un segment de col (15), rétréci fixé à une membrane souple (16) s'étendant du segment de col (15) en partant dans une direction essentiellement radiale en assurant l'étanchéité de l'organe d'obturation (8) par rapport au boîtier de soupape (1) tout en permettant sa mobilité axiale.

12. Soupape à siège double selon la revendication 11,
**caractérisée en ce que**
le second organe d'obturation (9) comporte une tige de manoeuvre (44) fixée radialement de façon concentrique dans le premier organe d'obturation (8), cette tige étant reliée par son autre extrémité à un dispositif d'actionnement pneumatique (10).

13. Soupape à siège double selon la revendication 11 ou 12,
**caractérisée en ce que**
les surfaces actives pour la pression régnant dans la zone de passage (2) de la membrane (16) et du premier organe d'obturation (8) sont essentiellement égales.

14. Soupape à siège double selon l'une des revendications 11 à 13,
**caractérisée en ce que**
le dispositif d'actionnement (10) comprend un autre ensemble piston/cylindre agissant sur l'extrémité de la partie en forme d'enveloppe (13) du premier organe d'obturation (8) à l'extérieur de la membrane (16) et permettant l'arrivée d'air sur le premier siège de soupape (11) pendant que le second siège de soupape (12) est fermé.

15. Soupape à siège double selon les revendications 12 à 14,
**caractérisée par**
un ressort (45) coopérant entre le second organe d'obturation (9) et le premier organe d'obturation (8), et lors de l'appui du second organe d'obturation (9) contre le second siège de soupape (12), ce ressort exerce une force d'application sur le premier organe d'obturation (8) contre le premier siège de soupape (11).

16. Soupape à siège double selon la revendication 15,
**caractérisée en ce que**
le ressort (45) est prévu à l'intérieur du premier organe d'obturation (8).

17. Soupape à siège double selon les revendications 15 ou 16,
**caractérisée en ce que**
le second organe d'obturation (9) peut être mis à l'air par soulèvement de la tige d'actionnement (44) alors que le ressort Belleville (45) maintient le premier organe d'obturation (8) pressé contre le premier siège de soupape (11).

18. Soupape à siège double selon l'une des revendications précédentes,
**caractérisée en ce que**
deux raccordements de nettoyage (35, 36) débouchent dans la cavité (34), ces raccordements se fermant avec deux soupapes de nettoyage (37, 38).

19. Soupape à siège double selon la revendication 18,
**caractérisée en ce que**
les sièges de soupape (39, 40) des soupapes de nettoyage (37, 38) sont prévus au voisinage immédiat de leur embouchure dans la cavité (34).
